# EUROPÄISCHE PATENTSCHRIFT

(11) **EP 2 662 163 B1**
(45) Veröffentlichungstag und Bekanntmachung des Hinweises auf die Patenterteilung: **02.08.2017**
(21) Anmeldenummer: 13167144.8
(22) Anmeldetag: 08.05.2013
(51) Int. Cl.: B22D 19/00, B22D 19/04, E03C 1/04, F16K 11/00

(54) **Druckgussbauteil sowie Verfahren zur Herstellung eines Druckgussbauteils**
Die cast component and method for producing die cast components
Elément de coulée sous pression et procédé de fabrication d'un élément de coulée sous pression

(30) Priorität: 10.05.2012 EP 12167501; 17.11.2012 WO PCT/EP2012/072938; 17.11.2012 WO PCT/EP2012/072939
(43) Veröffentlichungstag der Anmeldung: 13.11.2013
(60) Teilanmeldung: 17166529.2
(73) Patentinhaber: HDO -Druckguss- und Oberflächentechnik GmbH, 33106 Paderborn (DE)
(72) Erfinder: Gossing, Alexander, 33098 Paderborn (DE); Lauterbach, Arno, 33181 Bad Wünnenberg (DE); Kießler, Peter, 33178 Borchen (DE); Öffler, Andreas, 59597 Erwitte (DE); Stümpel, Josef, 33178 Borchen (DE); Franke, Ulrich, 33106 Paderborn (DE); Herberhold, Dr. Heinz, 59555 Lippstadt (DE); Stollburges, Dieter, 33178 Borchen (DE)
(74) Vertreter: Albrecht, Ralf

(56) Entgegenhaltungen:
- WO-A1-2004/048765
- DE-A1- 3 838 935
- DE-A1- 19 639 320
- DE-A1-102007 055 328
- DE-C- 525 762
- US-A- 2 219 471
- US-A- 2 795 844
- US-A- 5 579 823
- US-A1- 2003 062 088
- US-A1- 2007 271 695
- MAIER R D ET AL: "Druckguss aus Kupferlegierungen = Die Casting of Copper Alloys", GIESSEREIPRAXIS, FACHVERLAG SCHIELE UND SCHON GMBH, BERLIN, DE, Nr. 22, 25. November 1974 (1974-11-25), Seiten 437-446, XP009165907, ISSN: 0016-9781
- ANONYMOUS: "PRODUCING THIN-WALL ZINC FAUCET DIE CASTINGS - APPLICATIONS OF ILZRO BATTELLE RESEARCH FINDINGS", DIE CASTING ENGINEER, DETROIT, US, Bd. 18, Nr. 2, 1. März 1974 (1974-03-01), Seiten 12-14,16, XP009165906, ISSN: 0012-253X

## Beschreibung

Die Erfindung betrifft eine Wasserauslaufarmatur umfassend einen im Druckgießverfahren aus Metall oder einer Metallegierung hergestellten Grundkörper mit einem Hohlraum, in dem mehrere Öffnungen vorgesehen sind, durch welche der Hohlraum von außen zugänglich ist, dessen Außenseite zumindest in den Abschnitten des Grundkörpers, für deren Formgebung der Gießkern bei einem Druckgießvorgang verantwortlich ist, vollflächig an der Innenseite des Grundkörpers anliegt und in dem wenigstens ein Kanal zur Fluidführung vorgesehen ist.

Des Weiteren betrifft die Erfindung ein Verfahren zur Herstellung einer Wasserauslaufarmatur umfassend einen Grundkörper mit einem Hohlraum, wobei in dem Grundkörper mehrere Öffnungen vorgesehen sind, durch welche der Hohlraum von außen zugänglich ist, mit den Schritten:
- ein Druckgießwerkzeug mit einem darin gehaltenen Gießkern wird bereitgestellt,
- der Grundkörper wird durch Druckgießen aus Metall oder einer Metalliegierung hergestellt, und
- das Druckgießwerkzeug wird von dem Grundkörper entfernt,
wobei der Gießkern in dem Grundkörper verbleibt und in dem Gießkern wenigstens ein Kanal zur Fluidführung vorgesehen wird.

Derartige Gussbauteile und Verfahren zu deren Herstellung sind in verschiedenen Ausgestaltungen aus dem Stand der Technik bekannt. Die DE 10 2009 024 791 A1 beispielsweise offenbart eine Vorrichtung und ein Verfahren zur Herstellung eines Druckgussbauteils, bei dem ein als Form dienendes Druckgießwerkzeug sowie ein verlorener Gießkern zum Einsatz kommen. Der verlorene Gießkern ermöglicht es dabei, ein Druckgussbauteil mit einem Hohlraum zu erhalten. Dazu wird in an sich bekannter Weise flüssiges Material, insbesondere erhitztes Metall unter hohem Druck in das Druckgießwerkzeug eingedrückt. Das Material füllt den durch das Druckgießwerkzeug definierten Raum aus, wobei der Bereich, über den sich der verlorene Gießkern erstreckt, frei bleibt. Nach einer vorgegebenen Zeitspanne, in welcher das Material abkühlt, wird das Druckgießwerkzeug von dem Druckgussbauteil entfernt. Anschließend wird der verlorene Gießkern, beispielsweise thermisch, katalytisch und/oder durch Auflösen aus dem Druckgussbauteil herausgelöst. Das erhaltene Druckgussbauteil kann dann weiterverarbeitet bzw. unmittelbar seiner Verwendung zugeführt werden.

Die Fertigung von Bauteilen im Gießverfahren hat sich auch für fluldführende Bauteile, also Bauteile, die mit fluidführenden Leitungen versehen werden, als geeignet erwiesen. Dabei kann es sich beispielsweise um Sanitär-Bauteile, insbesondere Wasserauslaufarmaturen, handeln.

Zur Herstellung eines derartigen Bauteils wird in der oben beschriebenen Weise zunächst ein im Wesentlichen hohler Grundkörper aus Metall - beispielsweise das Gehäuse einer Wasserauslaufarmatur - hergestellt. Anschließend werden in dem Innenraum des Grundkörpers weitere Teile wie etwa Leitungen und Durchflussregelungsvorrichtungen montiert. Neben einfachen Ventilen kommen auch Mischkartuschen zum Einsatz, durch welche nicht nur ein Öffnen und Verschließen der Leitungen, sondern auch ein Mischen von Fluiden, insbesondere unterschiedlicher Temperatur, möglich ist.

Die Installation von weiteren Bauteilen an bzw. in einer im Gießverfahren hergestellten Wasserauslaufarmatur wird teilweise jedoch als nachteilig empfunden, da diese mit einem hohen Zeitaufwand und hohen Fertigungskosten verbunden ist.

Um dieser Problematik zu begegnen, wird in der US 2003/0062088 A1 vorgeschlagen, in den Gießkern, der in üblicherweise aus Formsand besteht, eine Leitung einzuarbeiten. Diese Leitung verbleibt nach dem Gießvorgang in dem Armaturengehäuse, während der Formsand entfernt wird.

In der US 5,579,823 A ist ferner ein Verfahren zum Gießen einer Wasserauslaufarmatur beschrieben, bei dem ein sogenannter Permanentkern als Gießkern zum Einsatz kommt, der nach dem Fertigungsprozess in dem Bauteil verbleibt und der Bereitstellung einer Wasserführung in der Armatur dient. Der Permanentkern ist dabei aus mehreren entsprechend geformten Teilen zusammengesetzt, die aus einem Material bestehen sollen, dessen Schmelzpunkt oberhalb des Schmelzpunktes des Materials liegt, aus welchem das Armaturengehäuse gegossen wird.

Schließlich ist aus der EP 2 033 721 A1 ein Verfahren zur Herstellung von Gehäusen für Sanitärarmaturen bekannt. Bei diesem wird zunächst ein vorgeformtes Hohlprofil, welches aus mehreren Elementen besteht und ein Leitungssystem bildet, bereitgestellt und mit einem Umhüllungsmaterial versehen, um einen Gießkern für den Gießvorgang zu erhalten. Insbesondere wird vorgeschlagen, Formsand als Umhüllungsmaterial zu verwenden, der nach dem Gießvorgang über den Anschluss für Kaltwasser wieder entfernt werden kann.

Ausgehend von diesem Stand der Technik ist es eine Aufgabe der vorliegenden Erfindung, ein fluidführendes Gussbauteil der eingangs genannten Art zu schaffen, welches auf einfachem Wege und kostengünstig hergestellt werden kann, wobei es sich durch eine hohe Qualität und Zuverlässigkeit auszeichnet. Darüber hinaus ist es eine Aufgabe der vorliegenden Erfindungen, ein Verfahren zur Herstellung eines derartigen Gussbauteils anzugeben.

Diese Aufgabe wird bei einer Wasserauslaufarmatur einem Druckgussbauteil der eingangs genannten Art dadurch gelöst, dass der Gießkern aus einem Material besteht, dessen Schmelzpunkt unterhalb des Schmelzpunktes des Materials liegt, aus welchem der Grundkörper hergestellt ist, und dass die Außenseite des Gießkerns zumindest in den Abschnitten des Grundkörpers, für deren Formgebung der Gießkern bei einem Druckgießvorgang verantwortlich ist, vollflächig an der Innenseite des Grundkörpers anliegt. Darüber hinaus wird die Aufgabe bei einem Verfahren der eingangs genannten Art dadurch gelöst, dass ein Gießkern aus einem Material eingesetzt wird, dessen Schmelzpunkt unterhalb des Schmelzpunktes des Materials liegt, aus welchem der Grundkörper hergestellt wird.

Der Erfindung liegt somit die an sich bekannte Idee zugrunde, bei einem fluidführenden Bauteil, welches im Druckgießverfahren hergestellt wurde, den Gießkern, der normalerweise nach dem Gießvorgang entfernt wird, in dem hergestellten Grundkörper vollständig zu belassen und diesen gezielt für die Fluidführung, also die Führung beliebiger Fluide, insbesondere Flüssigkeiten, Dampf oder Gas, zu nutzen. Dafür ist in dem für das Gießen erforderlichen Gießkern wenigstens ein Kanal zur Fluidführung vorgesehen. Hierdurch wird ermöglicht, die erfindungsgemäße Wasserauslaufarmatur unmittelbar nach dem Abschluss des Gießvorganges einer Verwendung, beispielsweise an einem Waschbecken oder einer Badewanne zuzuführen. Es müssen keine - als separate Bauteile ausgebildete - Leitungen in dem Grundkörper der Wasserauslaufarmatur vorgesehen werden, da der erfindungsgemäß ausgebildete Gießkern die Funktion der Leitungen übernimmt. Hierdurch wird verhindert, dass der Grundkörper der Wasserauslaufarmatur, der in der Regel aus einem Metall gefertigt ist, in Kontakt mit dem Fluid kommt. Der Grundkörper wird somit durch den Gießkern automatisch vor Korrosion geschützt, ohne dass zusätzliche, Kosten verursachende, Maßnahmen wie etwa eine Kunststoff-Versiegelung der Grundkörper-Innenseite erforderlich wären.

Da es sich um den Gießkern handelt, der für den Gießvorgang verwendet wurde, füllt dieser den Grundkörper zumindest in denjenigen Abschnitten, für deren Formgebung er verantwortlich ist, vollständig aus, so dass seine Außenfläche in diesen Abschnitten in vollflächigen Kontakt mit der Innenseite des hergestellten Grundkörpers steht. Der Gießkern wird dadurch automatisch in dem Grundkörper gehalten, ohne dass zusätzlich Befestigungsmittel vorgesehen werden müssten, durch welche zusätzlicher Aufwand und Kosten entstehen würden.

Die erfindungsgemäße Wasserauslaufarmatur kann auf einfachem Wege erhalten und nach einer vergleichsweise kurzen Produktionszeit ihrer Verwendung zugeführt werden. Dabei zeichnet sich der in dem Gießkern vorgesehene Kanal durch eine hohe Dichtigkeit aus. Die erhaltene Wasserauslaufarmatur kann daher besonders zuverlässig, insbesondere im Sanitärbereich, eingesetzt werden.

Erfindungsgemäß wird für den Gießkern ein Kunststoffmaterial verwendet, dessen Schmelzpunkt unterhalb des Schmelzpunktes des Materials, d.h. des Metalls oder der Metalliegierung, liegt, aus welchen der Grundkörper hergestellt wird. Zweckmäßigerweise liegt die Schmelztemperatur bzw. der Schmelzpunkt des Gießkernmaterials wenigstens 30°C, vorzugsweise aber wenigstens 50°C und insbesondere wenigstens 100 °C unterhalb des Schmelzpunktes des Materials aus welchem der Grundkörper besteht. Dabei kommen bevorzugt faserverstärkte und/oder glasfaserverstärkte Kunststoffe zum Einsatz, denen gegebenenfalls Keramik- und/oder Glasanteile zugemischt werden können. Diese Materialien bieten den Vorteil, dass der Gießkern leicht herzustellen bzw. zu bearbeiten ist.

Wesentlich hierbei ist, dass beim Druckgießen Metalllegierungen zum Einsatz kommen, deren Schmelzpunkt beispielsweise im Vergleich zu Stahllegierungen relativ niedrig ist, und zudem im Druckgießverfahren hergestellte Bauteile nur eine geringe Wandstärke von wenigen Millimetern besitzen. Beispielsweise kann der Grundkörper aus einer Zinklegierung bestehen, deren Schmelztemperatur üblicherweise im Bereich von 400 bis 420°C liegt. In diesem Fall kann der Grundkörper eine Wandstärke im Bereich von 1,0 bis 3,5 mm, insbesondere im Bereich von 1,5 bis 2,5 mm und vorzugsweise im Bereich von etwa 2 mm aufweisen. Alternativ können Magnesium-Legierungen zum Einsatz kommen, deren Schmelzpunkt bei etwa 620°C und höher liegt. Mit einer solchen Magnesium-Legierung lassen sich Wandstärken im Bereich von 1,0 bis 4,5 mm, insbesondere im Bereich von 2,0 bis 3,0 mm und vorzugsweise im Bereich von etwa 2,5 mm realisieren. Beim Einsatz von Aluminium-Legierungen liegen die Schmelztemperaturen bei 690 °C oder höher. Ein aus einer solchen Aluminium-Legierung bestehenden Grundkörper besitzt eine Wandstärke von 1,0 bis 4,5 mm, insbesondere im Bereich von 2,0 bis 3,0 mm und vorzugsweise im Bereich von 2,5 mm.

Die meisten Kunststoffe besitzen Schmelzpunkte, die unterhalb der angegebenen Temperaturen liegen, so dass eine breite Materialauswahl für den Gießkern zur Verfügung steht.

Der Gießkern kann einteilig ausgebildet sein, so dass er den Grundkörper in denjenigen Abschnitten, für deren Formgebung er beim Gießvorgang verantwortlich ist, vollständig ausfüllt. Alternativ ist es auch möglich, mehrere Gießkernelemente zu verwenden, die dann für die Formgebung von jeweils benachbarten Abschnitten des herzustellenden Grundkörpers verantwortlich sind und diese ausfüllen, wobei sie insbesondere jeweils einen Kanalabschnitt des zur Fluidführung dienenden Kanals ausbilden. Dies hat sich insbesondere als zweckmäßig erwiesen, wenn ein Hohlraum mit einer vergleichsweise komplexen Struktur erhalten werden soll. Dann können mehrere weniger komplex geformte Gießkernteile zu einem Gießkern der erwünschten Form zusammengesetzt werden.

Beispielsweise ist es möglich, ein Gießkernelement für den Basisabschnitt der Wasserauslaufarmatur und ein weiteres Gießkernelement für ein von dem Basisabschnitt abragenden Arm vorzusehen. Wesentlich ist, dass die Gießkernelemente jeweils einteilig ausgebildet sind, d.h. quasi monolithisch aus einem einheitlichen Material ausgebildet sind und damit von innen nach außen nicht aus mehreren Segmenten bestehen, wie dies bei den zusammengesetzten Gießkernen der Fall ist, welche aus der US 2003/0062088 oder der EP 2 033 721 A1 bekannt sind.

Gemäß einer Ausführungsform der Erfindung ist vorgesehen, dass in einem überwiegenden Teil - d.h. in wenigstens 60% oder 70% - der Kontaktfläche, insbesondere nahezu dem gesamten Kontaktflächenbereich - d.h. in wenigstens 80% oder 90% des Kontaktflächenbereiches - und bevorzugt in dem gesamten Kontaktflächenbereich zwischen dem Gießkern und dem Grundkörper die Wandstärke des Gießkerns gleich groß oder größer ist als die Wandstärke des Grundkörpers. Dabei kann die Wandstärke des Gießkerns so bemessen sein, dass sie wenigstens 1,3-mal, insbesondere wenigstens 1,5-mal so groß ist wie die Wandstärke des Grundkörpers. Dadurch, dass die Wandstärke in dem Bereich des Gießkerns im gesamten Bereich der Wasserauslaufarmatur wenigstens genauso groß ist wie die Wandstärke des zu gießenden Grundkörpers selbst, wird eine ausreichende Wärmeaufnahmekapazität während des Gießvorgangs sichergestellt. Des Weiteren ist die Wandstärke so groß, dass die beim Druckgießen auftretenden Drücke kompensiert werden können. Gegebenenfalls kann der Gießkern mit Versteifungsrippen und/oder Stegen versehen sein. Des Weiteren können in dem Kanal auch Stege vorgesehen sein, welche den Kanal durchsetzen. Sofern mehrere Gießkernelemente zum Einsatz kommen, sollten diese ineinander greifen, wobei die entsprechende Übergangsbereiche zwischen den Gießelementen entsprechend abgerundet sein sollten, um die beim Druckgießen auftretenden Spannungen so gering wie möglich zu halten. Dabei können natürlich auch in einem gewissen Maß Bereiche verbleiben, in denen die Wandstärke des Gießkerns noch kleiner als die Wandstärke des Grundkörpers bleibt. Dies ist insbesondere in den Bereichen der Fall, in welchen beim Druckgießen in die Gießform von außen ein Kern eingefahren wird, welcher gegebenenfalls den Gießkern von innen abstützt. Entsprechende Wandbereiche werden also in erster Linie im Bereich der Öffnungen des Grundkörpers vorhanden sein.

Gemäß einer Ausführungsform der vorliegenden Erfindung kann vorgesehen sein, dass durch den Kanal zwei der Öffnungen in dem Grundkörper miteinander verbunden werden. Der Kanal kann dann eine Einlassöffnung in der Wasserauslaufarmatur, an welcher beispielsweise eine Zuführleitung für Wasser angeschlossen ist, mit einer Auslassöffnung, über welche Wasser in ein Waschbecken oder ein Badewanne eingelassen werden kann, verbinden.

In weiterer Ausgestaltung der vorliegenden Erfindung ist vorgesehen, dass ein Gießkern aus einem zur Wasserführung, insbesondere Trinkwasserführung, zugelassenen Material verwendet wird. Insbesondere für den Fall, dass die erfindungsgemäße Wasserauslaufarmatur zur Trinkwasserführung verwendet wird, muss das Material, aus welchem der Gießkern gefertigt ist, neben der Temperaturstabilität besondere Hygiene- und Sicherheitsanforderungen erfüllen. Diese Anforderungen werden von Materialien erfüllt, die zur Trinkwasserführung zugelassen sind.

Eine weitere Ausführungsform zeichnet sich dadurch aus, dass ein im Gießverfahren hergestellter Gießkern verwendet wird. Dieses Verfahren hat sich als besonders geeignet erwiesen, um Gießkerne der gewünschten bzw. erforderlichen Form zu erhalten. Dabei können im Rahmen des Gießverfahrens insbesondere Gießkerne komplexer Geometrie hergestellt werden. Um einen mehrteiligen Gießkern zu erhalten, werden insbesondere die einzelnen Teile separat, bzw. in separaten Formen gegossen und anschließend zusammengesetzt.

In Weiterbildung der Erfindung wird in dem Gießkern wenigstens eine Befestigungs-Aussparung zur Aufnahme von Befestigungsmitteln, um die Wasserauslaufarmatur an einem weiteren Bauteil, insbesondere einem Waschtisch oder Waschbecken, anzubringen, insbesondere wenigstens eine Gewindebohrung, vorgesehen. In dieser Ausgestaltung wird der Gießkern nicht nur genutzt, um als Fluidleitungen dienende Kanäle bereitzustellen, sondern der Gießkern ist derart ausgebildet, dass eine Möglichkeit der Befestigung des Gussbauteils an einem weiteren Bauteil gegeben ist. Dazu sind in dem Gießkern eine oder mehrere Befestigungsaussparungen vorgesehen, welche Befestigungsmittel, beispielsweise eine Gewindebuchse aufnehmen können. Alternativ kann das Gewinde auch unmittelbar in den Gießkern eingebracht werden, beispielsweise im Rahmen des Gießvorganges des Gießkerns, oder durch anschließende Bohrung. In die Gewinde kann dann eine Schraube eingebracht werden, über welche die Wasserauslaufarmatur in an sich bekannter Weise an einem Waschbecken fixiert werden kann.

Gemäß einer weiteren Ausführungsform der Erfindung werden in dem Gießkern ein Aufnahmeraum für eine Durchflussregelungs-Vorrichtung und in dem Grundkörper eine Öffnung, durch welche die Durchflussregelungs-Vorrichtung wenigstens teilweise in den Aufnahmeraum eingebracht werden kann, vorgesehen.

Bei dieser Ausführungsform ist der Gießkern derart ausgestaltet, dass eine Durchflussregelungsvorrichtung in diesem platziert werden kann. Zusätzliche Befestigungsmittel zur Fixierung der Durchflussregelungsvorrichtung in dem Grundkörper sind daher nicht erforderlich. Die Fertigstellung der Wasserauslaufarmatur wird so in erheblichem Maße vereinfacht und die Produktionskosten können reduziert werden.

Dabei ist die Durchflussregelungsvorrichtung zweckmäßigerweise derart ausgebildet und angeordnet, dass sie in den wenigstens einen Kanal zur Fluidführung integriert ist, so dass der Fluidstrom durch diesen über die Durchflussregelungsvorrichtung reguliert werden kann. Ist eine Warm- und eine Kaltwasserleitung vorhanden, so umfasst die Durchflussregelungsvorrichtung vorteilhafter Weise eine Mischkartusche, um durch Mischen eine gewünschte Wassertemperatur einzustellen zu können. Dabei können insbesondere zwei Kanäle, die an ihrem einen Ende jeweils an eine Warm- bzw. Kaltwasser-Zuführleitung angeschlossen sind und deren anderes Ende in die Durchflussregelungsvorrichtung mündet, in dem Gießkern vorgesehen sein. Von der Durchflussregelungsvorrichtung führt dann ein weiterer Kanal, bzw. Kanalabschnitt zu einer Austrittsöffnung der Wasserauslaufarmatur, so dass Wasser mit einer von einem Benutzer eingestellten Temperatur in ein Waschbecken oder eine Badewanne eingelassen werden kann. Diese Ausgestaltung ist analog zu der aus dem Stand der Technik bekannten Wasserführung in einer Wasserauslaufarmatur mit Mischkartusche, wobei die Wasserleitungen durch die erfindungsgemäß in dem Gießkern vorgesehene Kanäle gebildet werden.

In Weiterbildung der Erfindung werden der wenigstens eine Kanal und/oder wenigstens eine Befestigungs-Aussparung und/oder ein Aufnahmeraum für eine Durchflussregelungs-Vorrichtung vor dem Gießen des Grundkörpers in dem Gießkern vorgesehen. In diesem Fall muss das Bauteil unmittelbar nach dem Gießvorgang zur Herstellung des Grundkörpers ggfs. keiner weiteren Bearbeitung unterzogen werden, bevor es seiner Verwendung zugeführt werden kann, da der Gießkern bereits die zur Fluidführung erforderliche Beschaffenheit aufweist.

Wird auch der Gießkern im Rahmen eines Gießverfahrens hergestellt, so kann insbesondere vorgesehen sein, dass der wenigstens eine Kanal und/oder wenigstens eine Befestigungs-Aussparung und/oder ein Aufnahmeraum für eine Durchflussregelungs- Vorrichtung während des Gießens des Gießkerns in den Gießkern eingebracht werden. Alternativ kann der Gießkern als Vollkörper gegossen werden, wobei der wenigstens eine Kanal und/oder wenigstens eine Befestigungs-Aussparung und/oder ein Aufnahmeraum für eine Durchflussregelungs-Vorrichtung im Anschluss an das Gießen des Gießkerns beispielsweise durch Bohren in den Gießkern eingebracht werden.

Dabei kann insbesondere vorgesehen sein, dass der Gießkern vor oder nach dem Gießen des Grundkörpers nachbearbeitet wird, was insbesondere zweckmäßig ist, wenn der wenigstens eine Kanal und/oder wenigstens eine Befestigungs-Aussparung und/oder ein Aufnahmeraum für eine Durchflussregelungs-Vorrichtung noch nicht die gewünschten Maße aufweisen, oder sich diese während des Gießens verändert haben sollten.

Alternativ können der wenigstens eine Kanal und/oder wenigstens eine Befestigungs-Aussparung und/oder ein Aufnahmeraum für eine Durchflussregelungs-Vorrichtung auch nach dem Gießvorgang des Grundkörpers in dem Gießkern vorgesehen werden. Dann kann z.B. zunächst ein als Vollkörper ausgebildeter Gießkern für die Herstellung des Grundkörpers durch Gießen in dem Gießwerkzeug gehalten werden, und im Anschluss an die Herstellung wird der von dem Grundkörper umgebene Gießkern nachbearbeitet. Dabei können insbesondere durch die Öffnungen in dem Grundkörper durch bohren der Kanal, die Befestigungs-Aussparung und der Aufnahmeraum in dem Gießkern vorgesehen werden, wenn dies zweckdienlich ist.

Hinsichtlich weiterer vorteilhafter Ausgestaltungen und Weiterbildungen der Erfindung wird auf die Unteransprüche sowie die nachfolgende Beschreibung eines Ausführungsbeispiels unter Bezugnahme auf die beiliegende Zeichnung erwiesen. In der Zeichnung zeigt:
- Figur 1: eine erfindungsgemäße Wasserauslaufarmaturin Schnittdarstellung;
- Figur 2: die in Figur 1 dargestellte Wasserauslaufarmatur in einem Druckgießwerkzeug; und
- Figur 3: eine weitere erfindungsgemäße Wasserauslaufarmatur in Schnittdarstellung.

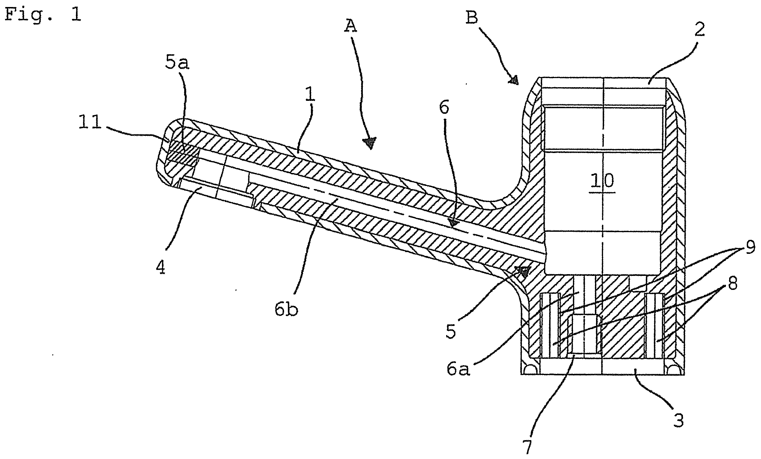

Die Figur 1 zeigt eine erfindungsgemäße Wasserauslaufarmatur. Diese umfasst einen im Druckgießverfahren gefertigten Grundkörper, der hier das Gehäuse 1 der Wasserauslaufarmatur bildet und aus einer für das Druckgießen geeigneten Metalllegierung, insbesondere einer Zink-Legierung, einer Aluminium-Legierung oder einer Magnesium-Legierung besteht.

Das Gehäuse 1 der Wasserauslaufarmatur ist hohl ausgebildet und wird durch einen im Wesentlichen zylindrischen Basisabschnitt B und einen von diesem seitlich abragenden Arm A gebildet. Am oberen Ende des zylindrischen Basisabschnitts B ist eine Öffnung 2 für eine nicht eingezeichnete Durchfluss-Regelungsvorrichtung vorgesehen. An seiner Unterseite weist der zylindrische Basisabschnitt B ferner eine Öffnung 3 für die Wasserversorgung und die Befestigung der Wasserauslaufarmatur an einem weiteren Bauteil, insbesondere einem nicht dargestellten Waschbecken, auf. An der Unterseite des abragenden Arms A ist eine Wasseraustrittsöffnung 4 vorgesehen, in deren Bereich sich eine Gewindebohrung erstreckt, in welche ein Strahlformer (Perlator) eingeschraubt werden kann. Durch die drei Öffnungen 2, 3, 4 in dem Gehäuse 1 ist der Innenraum des Gehäuses 1 von außen zugänglich.

Der Innenraum des Gehäuses 1 ist nahezu vollständig mit einem Gießkern 5 gefüllt, der mit der Innenseite des Gehäuses 1 in allen Wandungsabschnitten des Gehäuses 1, für deren Formgebung er beim Druckgießen verantwortlich ist, in flächigern Kontakt steht. Durch den flächigen Kontakt ist gewährleistet, dass der Gießkern 5 sicher in dem Gehäuse 1 sitzt und nicht verrutschen kann. Des Weiteren ist das Gehäuse 1 so gestaltet, dass ein Herausfallen des Gießkerns 5 nicht möglich ist.

In dem Gießkern 5 ist ein als Wasserleitung dienender Kanal 6 vorgesehen, der eine Wassereinlassöffnung 7, die im Bereich der unteren Öffnung 3 des zylindrischen Basisabschnitt B liegt und durch diese zugänglich ist, mit der Wasseraustrittsöffnung 4 verbindet. An die Wassereinlassöffnung 7 kann eine nicht dargestellte Wasserzulaufleitung angeschlossen werden, um die Wasserauslaufarmatur mit Wasser zu speisen. Zu diesem Zweck ist im Bereich der Wassereinlassöffnung 7 eine Gewindebohrung vorgesehen, in welche die Wasserzulaufleitung eingeschraubt werden kann.

Der Gießkern 5 weist ferner zwei Befestigungs-Aussparungen 8 zur Aufnahme von Befestigungsmitteln auf, die hier als Gewindebohrungen 9 ausgebildet sind. Diese sind vorgesehen, um die Wasserauslaufarmatur an einem weiteren Bauteil, beispielsweise einem Waschtisch oder Waschbecken anzubringen, was in der Figur jedoch nicht dargestellt ist.

In dem Gießkern 5 ist ferner ein Aufnahmeraum 10 für eine Durchflussregelungs-Vorrichtung vorgesehen. Der Aufnahmeraum 10 wird durch eine Aussparung in dem Gießkern 5 gebildet, die sich im Wesentlichen im oberen Bereich des zylindrischen Basisabschnitts B des Gießkerns 5 erstreckt. Durch die obere Öffnung 2 kann die Durchfluss-Regelungsvorrichtung wenigstens teilweise in den Aufnahmeraum 10 eingebracht werden.

Der Aufnahmeraum 10 ist hier derart angeordnet, dass er den Kanal 6 unterbricht, so dass sich ein erster Abschnitt 6a des Kanals 6 von der Einlassöffnung 7 bis in den Aufnahmeraum 10 erstreckt und ein zweiter Abschnitt 6b des Kanals 6 von dem Aufnahmeraum 10 zu der Wasseraustrittsöffnung 2 verläuft. Ist die Durchfluss-Regelungsvorrichtung in dem Aufnahmeraum 10 platziert, so kann über diese der Wasserstrom durch den Kanal 6 reguliert werden.

Der Gießkern 5 besteht hier aus einem faserverstärktem Kunststoff und ist im Gießverfahren hergestellt worden. Wahlweise können der Kanal 6, die Befestigungs-Aussparungen 8 und der Aufnahmeraum 10 zumindest teilweise während des Gießens des Gießkerns 5 in diesen eingebracht werden, oder der Gießkern 5 wird als Vollkörper gegossen und der Kanal 6, die Befestigungs-Aussparungen 8 und der Aufnahmeraum 10 werden nach dem Gießen durch bohren in dem Gießkern 5 vorgesehen. Bei dem dargestellten Ausführungsbeispiel ist Letzteres der Fall.

Da der Abschnitt 6b des Kanals 6 von der vorderen Stirnkante 11 des Gießkerns 5 aus zu bohren ist, erstreckt sich der Kanalabschnitt 6b hier bis zu der Stirnseite 11, wo er in eine Öffnung mündet. Diese durch die Bohrung bedingte Öffnung ist mit einem kleinen Teilstück 5b verschlossen, welches zu dem Gießkern 5 gehört. Der Gießkern 5 ist somit zweiteilig ausgebildet.

Wie in der Zeichnung erkennbar ist, ist die Wandstärke des Gießkerns nahezu in allen Bereichen größer als die Wandstärke des Grundkörpers 1, die etwa 2 mm beträgt. Lediglich am oberen Endbereich des Basiskörpers B, wo der Gießkern 5 spitz zuläuft, ist eine Ausnahme gegeben. Im Bereich des Arms A ist die Wandstärke des Gießkerns 5 mehr als doppelt so dick wie die Wandstärke des Grundkörpers 1, im Bereich des Basiskörpers liegen die Wandstärkenverhältnisse zwischen 1,5 am oberen Endbereich des Basiskörpers B und sogar 6 im unteren Endbereich.

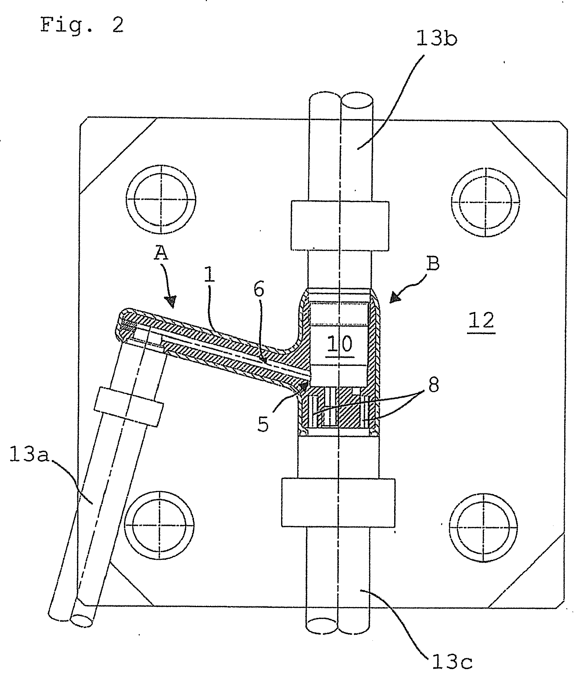

Zur Herstellung der erfindungsgemäßen Wasserauslaufarmatur wird zunächst ein hier zweiteilig ausgebildetes Druckgießwerkzeug 12 bereitgestellt, wie es in Figur 2 dargestellt ist. In dem Druckgießwerkzeug 12 ist der Gießkern 5 über insgesamt drei Stempel 13a, 13b, 13c gehalten. Durch die Stempel 13a, 13b, 13c werden sämtliche Öffnungen in dem Gießkern 5 verschlossen, so dass im Rahmen des Druckgießvorganges kein Material in den Kanal 6, die Befestigungs-Aussparungen 8 oder den Aufnahmeraum 10 gelangen kann. Zwischen dem Gießkern 5 und dem Druckgießwerkzeug 12 erstreckt sich ein freier Raum, durch den die Form des im Druckgießverfahren herzustellenden Gehäuses 1 der Wasserauslaufarmatur definiert wird.

In das Druckgießwerkzeug 12 wird unter hohem Druck flüssiges Metall, hier Zink, eingedrückt, so dass der zwischen dem Gießkern 5 und dem Druckgießwerkzeug 12 liegende Raum ausgefüllt wird. In dem Druckgießwerkzeug sind zu diesem Zweck mehrere nicht eingezeichnete Verteilungs-Kanäle vorgesehen, über die das flüssige Metall in den sich zwischen dem Gießkern 5 und dem Druckgießwerkzeug 12 erstreckenden freien Raum gelangen kann. Nach einer zur Abkühlung und Aushärtung des Metalls erforderlichen Zeitspanne wird das Druckgießwerkzeug 12 von dem hergestellten Gehäuse 1 entfernt, so dass die in Figur 1 dargestellte erfindungsgemäße Wasserauslaufarmatur erhalten wird.

Der Gießkern 5, insbesondere der in diesem vorgesehene Kanal 6, die Befestigungs-Aussparungen 8 und der Aufnahmeraum 10 können im Anschluss bei Bedarf nachbearbeitet werden, oder die Wasserauslaufarmatur wird unmittelbar an einem weiteren Bauteil, beispielsweise an einem Waschbecken, montiert und verwendet.

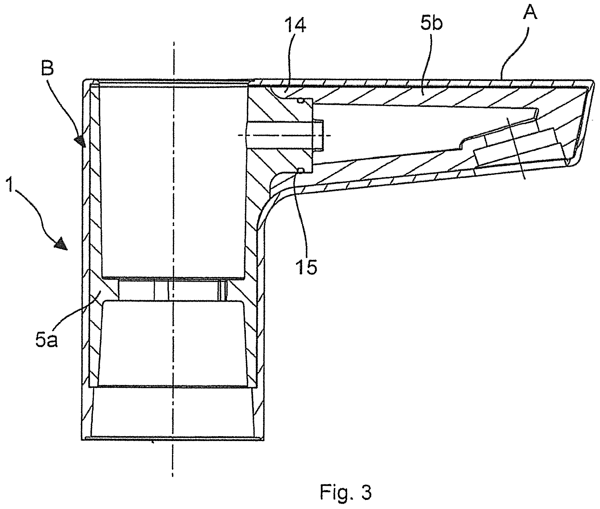

In der Figur 3 ist eine weitere Ausführungsform einer erfindungsgemäßen Wasserauslaufarmatur dargestellt. Wie in dieser Figur gut erkennbar ist, besteht der Gießkern 5 hier aus zwei Gießkernelementen 5a, 5b, wobei das eine Gießkernelement 5a dem Basiskörper B zugeordnet und beim Gießvorgang im Wesentlichen für dessen Formgebung verantwortlich ist, während das andere Gießkernelement 5b den Arm A ausfüllt und für dessen Formgebung beim Druckgießen verantwortlich ist. Die beiden Gießkernelemente 5a, 5b greifen am Übergangsbereich zwischen dem Arm A und dem Basiskörper B ineinander, wozu in dem Gießkernelement 5b, welches den Arm A ausfüllt, eine runde Aufnahme 14 und an dem anderen Gießkernelement 5a eine in die Aufnahme 14 eingreifenden Fortsatz 15 ausgebildet sind. Gut erkennbar ist, dass der die Aufnahme definierende Wandungsabschnitt an seiner Stirnseite stark abgerundet ist und die damit in Kontakt kommenden Bereiche entsprechend konturiert sind, so dass weiche Übergänge gebildet werden, um beim Druckgießen Spannungsspitzen zu vermeiden.

## Patentansprüche

1. Wasserauslaufarmatur umfassend einen im Druckgießverfahren aus Metall oder einer Metalllegierung hergestellten Grundkörper (1) mit einem Hohlraum, in dem mehrere Öffnungen (2, 3, 4) vorgesehen sind, durch welche der Hohlraum von außen zugänglich ist, wobei der Hohlraum zumindest teilweise mit einem Gießkern (5) gefüllt ist, dessen Außenseite zumindest in den Abschnitten des Grundkörpers (1), für deren Formgebung der Gießkern (5) bei einem Druckgießvorgang verantwortlich ist, vollflächig an der Innenseite des Grundkörpers (1) anliegt und in dem wenigstens ein Kanal (6) zur Fluidführung vorgesehen ist, **dadurch gekennzeichnet, dass** der Gießkern (5) aus einem Kunststoffmaterial besteht, dessen Schmelzpunkt unterhalb des Schmelzpunktes des Materials liegt, aus welchem der Grundkörper (1) hergestellt ist.

2. Wasserauslaufarmatur nach Anspruch 1, **dadurch gekennzeichnet, dass** der Gießkern (5) einteilig ausgebildet ist oder dass der Gießkern (5) unterteilt ist in mehrere hintereinander liegende und insbesondere jeweils einen Kanalabschnitt (6a, 6b) definierende Gießkernelemente (5a, 5b), wobei die Gießkernelemente (5a, 5b) jeweils einteilig ausgebildet sind.

3. Wasserauslaufarmatur nach einem der vorhergehenden Ansprüche, **dadurch gekennzeichnet, dass** in einem überwiegenden Teil der Kontaktfläche, insbesondere in dem gesamten oder nahezu dem gesamten Kontaktflächenbereich zwischen dem Gießkern (5) und dem Grundkörper (1) die Wandstärke des Gießkerns (5) gleich groß oder größer ist als die Wandstärke des Grundkörpers (1).

4. Wasserauslaufarmatur nach Anspruch 3, **dadurch gekennzeichnet, dass** der Grundkörper (1) aus einer Zink-Legierung besteht und eine Wandstärke im Bereich von 1,0 bis 3,5 mm, insbesondere im Bereich von 1,5 bis 2,5 mm und vorzugsweise von 2 mm aufweist oder dass der Grundkörper (1) aus einer Magnesium-Legierung besteht und eine Wandstärke im Bereich von 1,0 bis 4,5 mm, insbesondere im Bereich von 2,0 bis 3,0 mm und vorzugsweise von 2,5 mm aufweist, oder dass der Grundkörper (1) aus einer Aluminium-Legierung besteht und eine Wandstärke im Bereich von 1,0 bis 4,5 mm, insbesondere im Bereich von 2,0 bis 3,0 mm und vorzugsweise von 2,5 mm aufweist.

5. Wasserauslaufarmatur nach Anspruch 4, **dadurch gekennzeichnet, dass** die Wandstärke des Gießkerns (5) wenigstens 1,3-mal, insbesondere wenigstens 1,5-mal so groß wie der Wandstärke des Grundkörpers (1) ist.

6. Wasserauslaufarmatur nach einem der vorherigen Ansprüche, **dadurch gekennzeichnen, dass** der Gießkern (5) mit Versteifungsrippen und/oder Stegen versehen ist, wobei insbesondere in dem Kanal (6) Stege vorgesehen sind, welche den Kanal durchsetzen.

7. Wasserauslaufarmatur nach einem der vorhergehenden Ansprüche, **dadurch gekennzeichnet, dass** der Gießkern (5) aus einem faserverstärkten und/oder glasfaserverstärkten Kunststoff besteht und/oder dass dem Kunststoffmaterial des Gießkerns (5) Keramik- und/oder Glasanteile zugernischt sind.

8. Wasserauslaufarmatur nach einem der vorhergehenden Ansprüche, **dadurch gekennzeichnet, dass** in dem Gießkern (5) wenigstens eine Befestigungs-Aussparung (8) zur Aufnahme von Befestigungsmitteln, insbesondere wenigstens eine Gewindebohrung (9), vorgesehen ist, um das Gussbauteil an einem weiteren Bauteil, insbesondere einem Waschtisch oder Waschbecken, anzubringen und/oder dass in dem Gießkern (5) ein Aufnahmeraum (10) für eine Durchflussregelungs-Vorrichtung vorgesehen ist und der Grundkörper (1) eine Öffnung (2) aufweist, durch welche die Durchflussregelungs-Vorrichtung wenigstens teilweise in den Aufnahmeraum (10) eingebracht werden kann.

9. Verfahren zur Herstellung einer Wasserauslaufarmatur umfassend einen Grundkörper (1) mit einem Hohlraum, wobei in dem Grundkörper (1) mehrere Öffnungen (2, 3, 4) vorgesehen sind, durch welche der Hohlraum von außen zugänglich ist, mit den Schritten:
- ein Druckgießwerkzeug (12) mit einem darin gehaltenen Gießkern (5) wird bereitgestellt,
- der Grundkörper (1) wird durch Druckgießen aus Metall oder einer Metalllegierung hergestellt, und
- das Druckgießwerkzeug (12) wird von dem Grundkörper (1) entfernt,
wobei der Gießkern (5) in dem Grundkörper (1) verbleibt und in dem Gießkern (5) wenigstens ein Kanal (6) zur Fluidführung vorgesehen wird, **dadurch gekennzeichnet, dass** ein Gießkern (5) bestehend aus einem Kunststoffmaterial eingesetzt wird, dessen Schmelzpunkt unterhalb des Schmelzpunktes des Materials liegt, aus welchem der Grundkörper (1) hergestellt wird.

10. Verfahren nach Anspruch 9, **dadurch gekennzeichnet, dass** ein einteiliger Gießkern (5) verwendet wird oder dass ein Gießkern (5) verwendet wird, der mehrere hintereinanderliegende und insbesondere jeweils einen Kanalabschnitt (6a, 6b) definierende Gießkernelemente (5a, 5b) aufweist, wobei die Gießkernelemente (5a, 5b) jeweils einteilig ausgebildet sind.

11. Verfahren nach Anspruch 9 oder 10, **dadurch gekennzeichnet, dass** ein Gießkern (5) verwendet wird, dessen Wandstärke in einem überwiegenden Teil der Kontaktfläche, insbesondere in dem gesamten oder nahezu dem gesamten Kontaktflächenbereich zwischen dem Gießkern (5) und dem Grundkörper (1) gleich groß oder größer ist als die Wandstärke des Grundkörpers (1).

12. Verfahren nach Anspruch 11, **dadurch gekennzeichnet, dass** der Grundkörper (1) aus einer Zink-Legierung mit einer Wandstärke im Bereich von 1,0 bis 3,5 mm, insbesondere im Bereich von 1,5 bis 2,5 mm und vorzugsweise von 2 mm hergestellt wird.

13. Verfahren nach Anspruch 12, **dadurch gekennzeichnet, dass** ein Gießkern (5) eingesetzt wird, dessen Wandstärke wenigstens 1,3-mal, insbesondere wenigstens 1,5-mal so groß wie der Wandstärke des Grundkörpers (1) ist.

14. Verfahren nach einem der Ansprüche 9 bis 13, **dadurch gekennzeichnet, dass** der Gießkern (5) verwendet wird, der mit Versteifungsrippen und/oder Stegen versehen ist, wobei insbesondere ein Gießkern (5) verwendet wird, in denen Kanal (6) Stege vorgesehen sind, welche den Kanal durchsetzen.

15. Verfahren nach einem der vorhergehenden Ansprüche 9 bis 14, **dadurch gekennzeichnet, dass** ein insbesondere im Gießverfahren hergestellter Gießkern (5) verwendet wird, der aus einem faserverstärkten und/oder glasfaserverstärkten Kunststoff besteht, und/oder wobei dem Kunststoffmaterial des Gießkerns (5) Keramik- und/oder Glasanteile zugemischt werden.

## Claims

1. A water outlet fitting, comprising a base body (1) produced from metal or a metal alloy by the die casting method and having a cavity in which a number of openings (2, 3, 4) are provided by means of which the cavity is accessible from the outside, the cavity being at least partially filled with a casting core (5), the outside of which rests with all of its surface against the inside of the base body (1) at least in the sections of the base body (1), the shaping of which the casting core is responsible for, in contact with the inside of the base body (1) and in which at least one channel (6) is provided for the conveyance of fluid, **characterized in that** the casting core (5) is made of a material the melting point of which is lower than the melting point of the material from which the base body (1) is produced.

2. The water outlet fitting according to claim 1, **characterized in that** the casting core (5) is made in one part or that the casting core (5) is divided into a number of casting core elements (5a, 5b) lying one behind the other and in particular each defining a channel section (6a, 6b), the casting core elements (5a, 5b) each being made in one part.

3. The water outlet fitting according to any of the preceding claims, **characterized in that** in a predominant part of the contact surface, in particular in the entire or almost the entire contact surface region between the casting core (5) and the base body (1), the wall thickness of the casting core (5) is as great as or greater than the wall thickness of the base body (1).

4. The water outlet fitting according to claim 3, **characterized in that** the base body (1) is made of a zinc alloy and has a wall thickness in the range of 1.0 to 3.5 mm, in particular in the range of 1.5 to 2.5 mm and preferably in the region of approximately 2 mm or that the base body (1) is made of a magnesium alloy and has a wall thickness in the range of 1.0 to 4.5 mm, in particular in the range of 2.0 to 3.0 mm and preferably in the region of approximately 2.5 mm or that the base body (1) is made of an aluminum alloy and has a wall thickness in the range of 1.0 to 4.5 mm, in particular in the range of 2.0 to 3.0 mm and preferably in the region of 2.5 mm.

5. The water outlet fitting according to claim 4, **characterized in that** the wall thickness of the casting core (5) is at least 1.3 times, in particular at least 1.5 times as great as the wall thickness of the base body (1).

6. The water outlet fitting according to any of the preceding claims, **characterized in that** the casting core (5) is provided with reinforcing ribs and/or bars, wherein in particular bars are provided which pass through the channel (6) in the channel (6).

7. The water outlet fitting according to any of the preceding claims, **characterized in that** the casting core (5) is made at least substantially of a plastic material, in particular a fiber-reinforced and/or glass fiber-reinforced plastic and/or that ceramic and/or glass portions are added to the plastic material of the casting core (5).

8. The water outlet fitting according to any of the preceding claims, **characterized in that** there is provided in the casting core (5) at least one fastening recess (8) for holding fastening means, in particular a threaded hole (9), in order to attach the cast component to a further component, in particular a washstand or a wash basin and/or that there is provided in the casting core (5) a receiving area (10) for a flow regulation apparatus and the base body (1) has an opening (2) by means of which the flow regulation apparatus can be introduced at least partially into the receiving area (10).

9. A method for producing a water outlet fitting, comprising a base body (1) with a cavity, a number of openings (2, 3, 4) being provided in the base body (1) by means of which the cavity is accessible from the outside, with the steps:
- providing a die casting tool (12) with a casting core (5) held within the latter,
- producing the base body (1) from a metal or a metal alloy by die casting, and
- removing the die casting tool (12) from the base body (1),
wherein the casting core (5) remains in the base body (1) and at least one channel (6) for fluid conveyance is provided in the casting core (5), **characterized in that** a casting core (5) that is made of a material the melting point of which is lower than the melting point of the material from which the base body (1) is produced is used.

10. The method according to claim 9, **characterized in that** a one-part casting core (5) is used or that a casting core (5) is used that has a number of casting core elements (5a, 5b) lying one behind the other and in particular each defining a channel section (6a, 6b), the casting core elements (5a, 5b) each being formed in one part.

11. The method according to claims 9 or 10, **characterized in that** a casting core (5) is used which is made such that in a predominant portion of the contact surface, in particular in the entire or almost the entire contact surface region between the casting core (5) and the base body (1), the wall thickness of the casting core (5) is as great as or greater than the wall thickness of the base body (1).

12. The method according to claim 11, **characterized in that** the base body (1) is produced from a zinc alloy with a wall thickness in the range of 1.0 to 3.5 mm, in particular in the range of 1.5 to 2.5 mm, and preferably in the region of approximately 2 mm.

13. The method according to claim 12, **characterized in that** a casting core (5) is used of which the wall thickness is at least 1.3 times, in particular at least 1.5 times as great as the wall thickness of the base body (1).

14. The method according to any of the preceding claims 9 to 13, **characterized in that** a casting core (5) which is provided with reinforcing ribs and/or bars is used, wherein in particular a casting core (5) is used in the channel (6) of which there are bars which pass through the channel.

15. The method according to any of the preceding claims 9 to 14, **characterized in that** a casting core (5) is used that is made of a fiber-reinforced and/or glass-reinforced plastic and/or wherein ceramic and/or glass portions are added to the plastic material of the casting core (5).

## Revendications

1. Robinet de distribution d'eau comprenant un corps de base (1) fabriqué en métal ou à partir d'un alliage de métaux selon le procédé de moulage sous pression, muni d'un espace creux dans lequel plusieurs ouvertures (2, 3, 4) sont ménagées au moyen desquelles l'espace creux est accessible de l'extérieur, l'espace creux étant rempli au moins en partie avec un noyau de coulée (5) dont le côté extérieur, au moins dans les sections du corps de base (1) pour le façonnement duquel le noyau de coulée (5) est responsable lors d'une opération de moulage sous pression, est adjacent sur toute sa surface au côté intérieur du corps de base (1) et dans lequel au moins un canal (6) est ménagé pour guider le liquide, **caractérisé en ce que** le noyau de coulée (5) est constitué d'une matière plastique dont le point de fusion est situé en dessous du point de fusion de la matière dans laquelle le corps de base (1) est fabriqué.

2. Robinet de distribution d'eau selon la revendication 1, **caractérisé en ce que** le noyau de coulée (5) est réalisé d'une seule pièce ou **en ce que** le noyau de coulée (5) est divisé en plusieurs éléments (5a, 5b) de noyau de coulée situés les uns derrière les autres et définissant notamment respectivement une section de canal (6a, 6b), les éléments (5a, 5b) de noyau de coulée étant respectivement réalisés d'une seule pièce.

3. Robinet de distribution d'eau selon l'une quelconque des revendications précédentes, **caractérisé en ce que** dans une partie principale de la surface de contact, notamment dans la totalité ou quasi la totalité de la zone de la surface de contact entre le noyau de coulée (5) et le corps de base (1), l'épaisseur de paroi du noyau de coulée (5) est identique ou supérieure à l'épaisseur de paroi du corps de base (1).

4. Robinet de distribution d'eau selon la revendication 3, **caractérisé en ce que** le corps de base (1) est constitué d'un alliage de zinc et présente une épaisseur de paroi située dans la plage de 1,0 à 3,5 mm, notamment dans la plage de 1,5 à 2,5 mm et de préférence de 2 mm, ou **en ce que** le corps de base (1) est constitué d'un alliage de magnésium et présente une épaisseur de paroi située dans la plage de 1,0 à 4,5 mm, notamment dans la plage de 2,0 à 3,0 mm et de préférence de 2,5 mm, ou **en ce que** le corps de base (1) est constitué d'un alliage d'aluminium et présente une épaisseur de paroi située dans la plage de 1,0 à 4,5 mm, notamment dans la plage de 2,0 à 3,0 mm et de préférence de 2,5 mm.

5. Robinet de distribution d'eau selon la revendication 4, **caractérisé en ce que** l'épaisseur de paroi du noyau de coulée (5) est au moins 1,3 fois, notamment au moins 1,5 fois l'épaisseur de paroi du corps de base (1).

6. Robinet de distribution d'eau selon l'une quelconque des revendications précédentes, **caractérisé en ce que** le noyau de coulée (5) est muni de nervures de renforcement et/ou d'entretoises, des entretoises étant ménagées notamment dans le canal (6), lesquelles traversent le canal.

7. Robinet de distribution d'eau selon l'une quelconque des revendications précédentes, **caractérisé en ce que** le noyau de coulée (5) est constitué d'une matière plastique renforcée par fibres et/ou renforcée par fibres de verre et/ou en ce que des proportions de céramique et/ou de verre sont ajoutées à la matière plastique du noyau de coulée (5).

8. Robinet de distribution d'eau selon l'une quelconque des revendications précédentes, **caractérisé en ce qu**'au moins un évidement de fixation (8) destiné à loger des moyens de fixation, notamment au moins un trou fileté (9), est ménagé dans le noyau de coulée (5) afin de monter la pièce coulée sur une autre pièce de construction, notamment une table de lavabo ou un lavabo, et/ou en ce qu'un espace de logement (10) est ménagé dans le noyau de coulée (5) pour un dispositif de régulation de débit, et en ce que le corps de base (1) présente une ouverture (2) au moyen de laquelle le dispositif de régulation de débit peut être placé au moins en partie dans l'espace de logement (10).

9. Procédé de fabrication d'un robinet de distribution d'eau comprenant un corps de base (1) muni d'un espace creux, plusieurs ouvertures (2, 3, 4) étant ménagées dans le corps de base (1), au moyen desquelles l'espace creux est accessible depuis l'extérieur, comprenant les étapes:
- un outil de moulage sous pression (12) comprenant un noyau de coulée (5) maintenu dedans est mis à disposition,
- le corps de base (1) est fabriqué en métal ou à partir d'un alliage de métaux par moulage sous pression, et
- l'outil de moulage sous pression (12) est retiré du corps de base (1),
le noyau de coulée (5) restant dans le corps de base (1) et au moins un canal (6) destiné à guider le fluide étant ménagé dans le noyau de coulée (5), **caractérisé en ce qu'**un noyau de coulée (5) constitué d'une matière plastique est utilisé, dont le point de fusion est situé en dessous du point de fusion de la matière dans laquelle le corps de base (1) est fabriqué.

10. Procédé selon la revendication 9, **caractérisé en ce qu'**un noyau de coulée (5) d'une seule pièce est utilisé ou **en ce qu'**un noyau de coulée (5) est utilisé, lequel présente des éléments (5a, 5b) de noyau de coulée situés les uns derrière les autres et définissant notamment respectivement une section de canal (6a, 6b), les éléments (5a, 5b) de noyau de coulée étant respectivement réalisés d'une seule pièce.

11. Procédé selon la revendication 9 ou 10, **caractérisé en ce qu'**un noyau de coulée (5) est utilisé dont l'épaisseur de paroi, dans une partie principale de la surface de contact, notamment dans la totalité ou quasi la totalité de la zone de la surface de contact entre le noyau de coulée (5) et le corps de base (1), est identique ou supérieure à l'épaisseur de paroi du corps de base (1).

12. Procédé selon la revendication 11, **caractérisé en ce que** le corps de base (1) est constitué d'un alliage de zinc ayant une épaisseur de paroi située dans la plage de 1,0 à 3,5 mm, notamment dans la plage de 1,5 à 2,5 mm et de préférence de 2 mm.

13. Procédé selon la revendication 12, **caractérisé en ce qu'**un noyau de coulée (5) est utilisé dont l'épaisseur de paroi est au moins 1,3 fois, notamment au moins 1,5 fois l'épaisseur de paroi du corps de base (1).

14. Procédé selon l'une quelconque des revendications précédentes 9 à 13, **caractérisé en ce qu'**un noyau de coulée (5) est utilisé, lequel est muni de nervures de renforcement et/ou d'entretoises, notamment un noyau de coulée (5) étant utilisé dans lequel sont ménagées des entretoises (6) qui traversent le canal.

15. Procédé selon l'une quelconque des revendications précédentes 9 à 14, **caractérisé en ce qu'**un noyau de coulée (5) fabriqué notamment selon le procédé de moulage sous pression est utilisé, lequel est constitué d'une matière plastique renforcée par fibres et/ou renforcée par fibres de verres, et/ou des proportions de céramique et/ou de verre étant ajoutées à la matière plastique du noyau de coulée (5).
